# EUROPÄISCHE PATENTANMELDUNG

(11) **EP 1 496 588 A1**
(43) Veröffentlichungstag der Anmeldung: **12.01.2005**
(21) Anmeldenummer: 04009565.5
(22) Anmeldetag: 22.04.2004
(51) Int. Cl.: H02G 11/02, G01M 17/00

(54) **Vorrichtung zum Führen einer bewegbaren Versorgungseinrichtung in einer Ebene über einem zweidimensionalen Versuchsraum**

(30) Priorität: 09.07.2003 DE 10331099
(71) Anmelder: SIEMENS AKTIENGESELLSCHAFT, 80333 München (DE)
(72) Erfinder: Grimm, Peter, Dr., 91056 Erlangen (DE)

(57) **Zusammenfassung**

Die Erfindung betrifft eine Vorrichtung zum Führen einer bewegbaren Versorgungseinrichtung (O) in einer Ebene (E) über einem zweidimensionalen Versuchsraum (A) mit zumindest drei, mit der Versorgungseinrichtung (O) verbundenen, Kraftübertragungseinrichtungen, wobei über die Kraftübertragungseinrichtungen übertragene Kraftänderungen von einer Steuereinrichtung steuerbar sind. Die Kraftübertragungseinrichtungen sind so angeordnet und so mit der Versorgungseinrichtung (O) verbunden, dass die mit den auf die Versorgungseinrichtung (O) einwirkenden gesteuerten Kraftänderungen, die Versorgungseinrichtung (O) zu einer eindeutig bestimmten Position innerhalb der Ebene (E) über dem zweidimensionalen Versuchsraum (A) führbar ist.

## Beschreibung

Die Erfindung betrifft eine Vorrichtung zum Führen einer bewegbaren Versorgungseinrichtung in einer Ebene über einem zweidimensionalen Versuchsraum.

Messanordnungen mit einer, in einem zweidimensionalen Versuchsraum bewegbaren Plattformen erlauben das Messen und Prüfen von Kräften oder Beschleunigungen, welche auf die Plattform einwirken. Damit die Messungen durch möglichst wenig Randbedingungen eingeschränkt werden, muss die Plattform weitgehend frei im Versuchsraum bewegbar sein. Dies ist im Allgemeinen erfüllt, wenn die Plattform eine eigene Antriebseinheit mit eigener Energiequelle beinhaltet. Diese Antriebseinheit ist aber, abhängig von dem Gewicht der Plattform und der gewünschten Beschleunigungen der zu bewegenden Plattform, sperrig und schwer. Ist zudem der Versuchraum begrenzt, weil dieser sich beispielsweise in einer Halle befindet, können mit einer Plattform mit eigener Antriebseinheit und Energiequelle gegebenenfalls nicht die gewünschten hohen Beschleunigungen realisiert werden.

Soll auf die Energiequelle auf der Plattform verzichtet werden, muss die zum Antreiben der Plattform notwendige Energie in geeigneter Weise von außen zugeführt werden. Erfolgt diese Zufuhr über Kabel, ergibt sich aber gerade bei großen Versuchsräumen der Nachteil, dass die Kabel die Bewegungsfreiheit der Plattform im Versuchsraum einschränken können. Sollen lange Kabelzuführungen vermieden werden, ist eine Anordnung mit einem, über dem Versuchsraum angeordnetem, Kranbahnsystem denkbar. Dabei wird eine am Kranbahnsystem bewegbare und beispielsweise auf einer Laufkatze positionierte Versorgungseinrichtung in einer Ebene so bewegt, dass sich die Versorgungseinrichtung näherungsweise immer über der im Versuchsraum bewegten Plattform befindet. Damit kann zumindest die Länge der Kabelzuführungen, oder auch die von Schläuchen, zwischen der Versorgungseinrichtung und der Plattform verringert werden. Dadurch wird vermieden, dass diese Kabel oder Schläuche in den Versuchraum hineinragen und damit die Bewegung der Plattform im zweidimensionalen Versuchsraum einschränken. Damit die Versorgungseinrichtung möglichst schnell ist, um den schnellen Bewegungen der Plattform im Versuchsraum folgen zu können, sollte sie ein möglichst geringes Gewicht aufweisen. Dazu wird man üblicherweise die eigentliche Energiequelle außerhalb des Versuchsraumes anordnen und über geeignete Leitungen und entsprechende Leitungsführungen am Kranbahnsystem der bewegbaren Versorgungseinheit zuführen. Kranbahnsysteme haben aber den Nachteil, dass sie in aller Regel selbst ein sehr hohes Eigengewicht aufweisen. Entsprechend hohe Anforderungen sind dann aber auch an die Befestigung, wie beispielsweise die Deckenkonstruktion einer Versuchhalle, zu stellen.

Aufgabe der vorliegenden Erfindung ist es, eine andere Vorrichtung bereitzustellen, die es erlaubt, eine Versorgungseinrichtung über einem Versuchsraum so zu führen, dass sie einer bewegbaren Plattform in einem zweidimensionalen Versuchsraum folgt.

Diese Aufgabe wird gelöst durch eine Vorrichtung zum Führen einer bewegbaren Versorgungseinrichtung in einer Ebene über einem zweidimensionalen Versuchsraum nach Anspruch 1 mit zumindest drei, mit der Versorgungseinrichtung verbundenen Kraftübertragungseinrichtungen, wobei über die Kraftübertragungseinrichtungen übertragene Kraftänderungen von einer Steuereinrichtung steuerbar sind, und wobei die Kraftübertragungseinrichtungen so angeordnet sind und so mit der Versorgungseinrichtung verbunden sind, dass mit den auf die Versorgungseinrichtung einwirkenden gesteuerten Kraftänderungen die Versorgungseinrichtung zu einer eindeutig bestimmten Position innerhalb der Ebene über dem zweidimensionalen Versuchsraum führbar ist.

Dadurch, dass die Versorgungseinrichtung zu jedem eindeutig bestimmten Punkt über dem Versuchsraum führbar ist, hat sie alle Freiheitsgrade um einer im zweidimensionalen Versuchsraum bewegten Plattform zu folgen. Um die Zuführungen zwischen Versorgungseinrichtung und Plattform möglichst gering zu halten, ist die Versorgungseinrichtung immer so zu steuern, dass deren Position in der Ebene über dem Versuchsraum zumindest näherungsweise der Position der Plattform entspricht. Diese Ebene, in der die Versorgungseinrichtung führbar ist, ist selbst ein zweidimensionaler Raum mit näherungsweise konstantem Abstand zu dem zweidimensionalen Versuchsraum. Damit können die Längen der Zuführungen zwischen Versorgungseinrichtung und Plattform weitgehend konstant bleiben. Aufgrund der erfindungsgemäßen Vorrichtung zum Führen der Versorgungseinrichtung kann auf die Energiequelle auf der Plattform verzichtet werden. Dies erlaubt, dass die Plattform weniger groß ausgebildet sein muss. Zudem wird die Plattform aber insgesamt ein geringeres Gewicht aufweisen. Dies ermöglicht, das die Plattform in einem begrenzten zweidimensionalen Versuchsraum höheren Beschleunigungen ausgesetzt werden kann und damit höhere auf die Plattform einwirkende Beschleunigungen und deren Auswirkungen messbar sind. Dadurch, dass die Versorgungseinrichtung so geführt wird, dass sie weitgehend der Position der Plattform entspricht, wird vermieden, dass Zuführungen, wie Leitungen oder Schläuche, in den zweidimensionalen Versuchsraum hineinragen und die Bewegung der Plattform behindern und damit deren Bewegungsfreiheit einschränken. Durch entsprechendes Aneinanderreihen von infinitesimal kleinen Kraftänderungen und damit infinitesimal kleinen Wegänderungen der Versorgungseinrichtung in der Ebene kann die Versorgungseinrichtung auch beliebig komplexen Wegen der Plattform im Versuchsraum folgen. Damit lassen sich dann beispielsweise auch die auf die Plattform einwirkenden Kräfte messen, wenn die Plattform beispielsweise auf einer Kreisbahn oder einer Zickzackbahn geführt wird. Dies ermöglichst auch komplexe Situationen im Versuchsraum nachzubilden und die bei hohen Beschleunigungen einwirkenden Kräfte und Beschleunigungen zu messen.

In einer Ausführungsform sind die Kraftübertragungseinrichtungen als Seile mit entsprechenden Seilantrieben ausgebildet. Die erfindungsgemäße Vorrichtung ist damit weniger schwer als eine vergleichbare Vorrichtung, die als Kranbahnsystem ausgebildet ist. Damit können höhere Beschleunigungen der Versorgungseinrichtung erreicht werden und damit kann die Versorgungseinrichtung auch höheren Beschleunigungen der Plattform folgen, ohne dass die Messanordnung durch die Vorrichtung zum Führen der Versorgungseinrichtung eingeschränkt ist. Die Seilantriebe sind dabei so anzuordnen, dass die Versorgungseinrichtung über jede mögliche Position der im Versuchraum bewegbaren Plattform geführt werden kann. Letztendlich bestimmen die Orte der Seilantriebe die Abmessungen der Ebene, innerhalb der die Versorgungseinrichtung zu jeder eindeutig bestimmten Position führbar ist. Zudem bestimmen die Orte der Seilantriebe den Ausgangspunkt für die Richtung der auf die Versorgungseinrichtung einwirkenden Kraftänderungen. Alternativ können an den Orten der Seilantriebe entsprechende Führungseinrichtungen zum Führen der Seile vorgesehen sein, wobei sich dann die Seilantriebe an einem beliebig anderen Ort außerhalb des Versuchsraumes befinden können. Die durch die Orte der Seilantriebe oder der Führungseinrichtungen bestimmten Abmessungen der Ebene sollten weitgehend den Abmessungen des zweidimensionalen Versuchsraums entsprechen, damit die Versorgungseinrichtung auch über jede Position der Plattform im Versuchsraum geführt werden kann.

In einer Ausbildung der vorliegenden Erfindung sind die Seilantriebe und/oder die Führungseinrichtungen um die Ebene herum bewegbar angeordnet und von der Steuereinrichtung steuerbar. Damit lassen sich deren Orte und damit die Richtungen der über die Kraftübertragungseinrichtungen der auf das Objekt einwirkenden Kraftänderungen verändern. Dadurch kann bei geeigneter Steuerung die Versorgungseinrichtung mit geringeren Kraftänderungen zu einer Position in der Ebene bewegt werden.

Mittel zur Übertragung von Energie und/oder Daten und/oder Materialien von und zur bewegbaren Versorgungseinrichtung können vorgesehen sein, um beispielsweise die an der Plattform gemessenen Daten zur weiteren Auswertung über die Versorgungseinrichtung an die Steuereinrichtung zu übermitteln. Sie können auch vorgesehen sein, um die zum Steuern von Kraftänderungen entsprechenden Daten von der Steuereinrichtung an die Plattform zu übermitteln. Die Mittel können weiterhin vorgesehen sein, um Energie oder Kühlflüssigkeit von einem außerhalb des Versuchsraums angeordneten Energiespeicher oder Kühlflüssigkeitsspeicher über die Versorgungseinrichtung zu der Plattform im Versuchsraum zu führen. Durch geeignete Auswahl der Kraftübertragungseinrichtungen können diese auch zur Übertragung von Energie und/oder Daten und/oder Materialien genutzt werden. Somit können zumindest zusätzliche Zuführungen von außerhalb des Versuchsraumes hin zur Versorgungseinrichtung entfallen. Alternativ können diese Mittel auch über eine zusätzliche Haspel geführt werden, die über der Ebene angeordnet ist in der sich die Versorgungseinrichtung bewegt. Dabei werden die Mittel so von der Haspel gespannt, dass sie nicht durchhängen und damit nicht die Bewegungsfreiheit der Versorgungseinrichtung oder der Plattform einschränken.

Dadurch, dass die Mittel zur Übertragung von Energie und/oder Daten und/oder Materialien zwischen der Versorgungseinrichtung und der im Versuchsraum bewegbaren Plattform eine konstante Länge aufweisen und die Versorgungseinrichtung so über dem zweidimensionalen Versuchsraum geführt wird, dass die Position der Versorgungseinrichtung durch die Position der Plattform im Versuchsraum bestimmt ist, kann das Durchhängen der Mittel in den Versuchsraum und damit eine Einschränkung der Bewegungsfreiheit der Plattform vermieden werden. Die Erfindung sowie vorteilhafte Ausführungen derselben werden im weitern anhand der nachfolgenden Figuren näher beschrieben. Es zeigen:
- Fig.1:: eine Draufsicht der erfindungsgemäßen Vorrichtung mit drei Kraftübertragungseinrichtungen,
- Fig.2:: eine erste Ausführungsform in seitlicher Darstellung,
- Fig.3:: eine zweite Ausführungsform in seitlicher Darstellung.

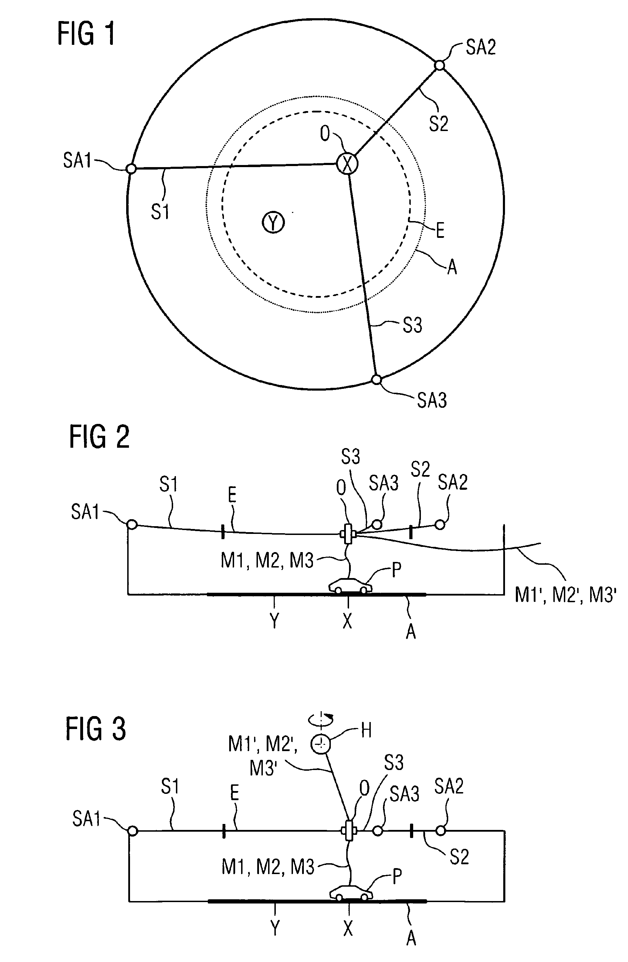

Figur 1 zeigt die erfindungsgemäße Vorrichtung zum Führen einer bewegbaren Versorgungseinrichtung O in einer Ebene E über einem zweidimensionalen Versuchsraum A. In der in Figur 1 gezeigten Ausführung weist die Vorrichtung drei Kraftübertragungseinrichtungen auf, wobei jede der Kraftübertragungseinrichtungen ein Seil S1,S2 und S3, sowie einen Seilantrieb SA1, SA2 und SA3 beinhaltet. Die punktierte Kreislinie kennzeichnet hier die Begrenzung des zweidimensionalen Versuchsraums A, innerhalb dessen eine Plattform frei bewegbar ist. Die innere gestrichelte Kreislinie kennzeichnet die Begrenzung der, über dem Versuchsraum angeordneten, Ebene E, innerhalb der die Versorgungseinrichtung O führbar ist. Die Seilantriebe SA1, SA2 und SA3 sind außerhalb der begrenzten Ebene E angeordnet und können beispielweise als Haspelantriebe ausgebildet sein. Die Seile S1,S2, und S3 sind am einen Ende mit der Versorgungseinrichtung O und am anderen Ende mit dem entsprechenden Seilantrieb SA1, SA2 oder SA3 verbunden. Abhängig von den Orten der Seilantriebe SA1, SA2 und SA3, das heißt abhängig von der Position der Seilantriebe außerhalb der Ebene E, ist die Richtung der über die Kraftübertragungseinrichtungen auf die Versorgungseinrichtung O einwirkenden Kraftänderungen vorgegeben. Ferner bestimmen die Orte der Seilantriebe SA1, SA2 und SA3 die Abmessungen des Ebene E, innerhalb dessen die Versorgungseinrichtung O beliebig, aber eindeutig durch die einwirkenden Kraftänderungen bewegbar ist. Damit die Versorgungseinrichtung O jeder beliebigen Bewegung der Plattform im Versuchsraum folgen kann, muss die Ebene E näherungsweise so groß sein wie der Versuchsraum A. Die in Figur 1 gezeigte Vorrichtung eignet sich in besonderer Weise zum Nachführen einer Versorgungseinrichtung O über einem Versuchsraum A.

Figur 2 zeigt eine mögliche Ausführung in seitlicher Darstellung, mit dem Versuchsraum A, der Ebene E, der Versorgungseinrichtung O und der Plattform P. Die Ebene E ist, wie bereits erläutert, durch die Position der Seilantriebe SA1,SA2 und SA3 aufgespannt. Befindet sich die Plattform O nun beispielsweise an einer Position X, so kann diese durch eine Steuereinrichtung (nicht gezeigt) zu einer Position Y geführt werden. Dies kann beispielsweise dadurch erfolgen, dass entsprechende Steuersignale über eine geeignete Luftschnittstelle zur Übertragung von Radiofrequenzen von der Steuereinrichtung an die Plattform P übertragen werden. Anhand der Steuersignale oder auch mit Hilfe eines Lagemesssystems auf der Plattform P kann dann die anzufahrende Position bestimmt werden. Gleichzeitig muss die Versorgungseinrichtung O entsprechend nachgeführt werden, wenn, wie im vorliegenden Beispiel gezeigt, die Versorgungseinrichtung O mit der Plattform P über Mittel M1, M2, M3 verbunden ist. Um die Versorgungseinrichtung O entsprechend von der Position X zur Position Y zu führen, müssen die Seilantriebe SA3 und SA1 so von der Steuereinrichtung gesteuert werden, dass die Länge der Seile S3 und S1 zwischen den Seilantrieben SA3 und SA1 und der Plattform O entsprechend verkürzt wird und entsprechend die Länge des Seils S2 verlängert wird. Dazu werden die Seile S3 und S1 auf die entsprechenden Seilantriebe SA3 und SA1, die beispielsweise als Haspelantriebe ausgebildet sind, aufgewickelt und entsprechend das Seil S2 vom Seilantrieb SA2 abgewickelt. Die durch die Veränderung der Seillängen resultierenden, und auf die Versorgungseinrichtung O einwirkenden Kraftänderungen bewirken, dass die Versorgungseinrichtung von der Position X in Richtung der Position Y beschleunigt und bewegt wird. Dadurch, dass die Steuereinrichtung die Seilantriebe und somit die Seillängen zwischen Versorgungseinrichtung O und Seilantrieben steuert, kommt es zu einer entsprechenden auf die Versorgungseinrichtung O einwirkende Kraftänderung, welche dann die Versorgungseinrichtung zu der Position Y führt. Damit die Versorgungseinrichtung O in der Ebene E zu jeder Position geführt werden kann, muss in der Steuereinrichtung eine Beziehung zwischen jeder der möglichen Positionen und den entsprechend notwendigen Kraftänderungen bekannt sein, so dass dadurch die Versorgungseinrichtung O durch die Steuerung der Kraftänderungen zu jeder eindeutig bestimmten Position in der Ebene E geführt werden kann. Diese Beziehungen sollen hier aber nicht näher beschrieben werden. Sie erschließen sich dem Fachmann sofort aus der Art und der Anordnung der erfindungsgemäßen Vorrichtung. Weiterhin wird davon ausgegangen dass die Steuereinrichtung für das Bewegen der Plattform P und die Steuereinrichtung für das Führen der Versorgungseinrichtung O ein und dieselbe Einrichtung sind oder zumindest so zusammenwirken, dass auf eine Änderung der Position der Plattform P auch eine entsprechende Bewegung der Versorgungseinrichtung O erfolgt. Nur dann kann die Versorgungseinrichtung O so geführt werden, dass diese sich zumindest immer näherungsweise über der Position der Plattform P befindet.

Durch entsprechendes Aneinanderreihen von infinitesimal kleinen Kraftänderungen und damit infinitesimal kleinen Wegänderungen der Versorgungseinrichtung O in der Ebene E kann die Versorgungseinrichtung O auch dann der Plattform P nachgeführt werden, wenn diese sich auf beliebig komplexen Wegen von Position X nach Position Y bewegt. Die vorliegende erfindungsgemäße Vorrichtung ermöglichst somit auch das Nachbilden von komplexen Bewegungssituationen im Versuchsraum A, ohne dass diese durch die Versorgungseinheit O eingeschränkt werden.

In einer weiteren Ausführungsform können zusätzlich die Seilantriebe SA1, SA2 und SA3 auf dem in Figur 1 gezeigten äußeren Kreis verfahren werden. Dadurch wird der Ort der Seilantriebe SA1, SA2, SA3 und damit die Richtung der auf die Versorgungseinrichtung O einwirkenden Kraftänderungen verändert. So kann beispielsweise die Versorgungseinrichtung O vom Punkt X zum Punkt Y bewegt werden, indem zuerst der Ort der Seilantriebe SA1 so verfahren wird, bis sich das Seil S1 in Richtung einer direkten Verbindungslinie zwischen Punkt X und Punkt Y befindet. Um die Versorgungseinrichtung O weiterhin eindeutig zu jeder Position im Versuchsraum führen zu können, müssen ggf. auch die Orte der Seilantriebe SA2 und SA3 entsprechend verändert werden. Erst danach wird je nach Ort der Seilantriebe SA1, SA2, SA3 beispielsweise nur noch die Seillänge S1 verkürzt und entsprechend die Seillängen S2 und S3 verlängert. Damit ist nun eine geringere Kraftänderung über die Kraftübertragungseinrichtung mit dem Seilantrieb SA1 und dem Seil S1 notwendig, da die notwendige Längenänderung des Seiles S1 nun dem tatsächlichen kleinsten Abstand zwischen Position X und Position Y entspricht.

Die in Figur 1 gezeigte Ausführung der erfindungsgemäßen Vorrichtung weist drei Kraftübertragungseinrichtungen mit jeweils einem Seil S1,S2 und S3 und einem Seilantrieb SA1,SA2 und SA3 auf. Die drei Seilantriebe SA1,SA2,SA3 sind dabei so angeordnet, dass die entsprechenden Seile jeweils im Winkel von 120 Grad auf die Versorgungseinrichtung O einwirken. Diese Anordnung bewirkt, dass die Versorgungseinrichtung O innerhalb der gekennzeichneten Ebene E durch entsprechend gesteuerte Kraftänderungen eindeutig bewegt werden kann und somit jede Änderung der im darunter liegenden Versuchsraum A bewegten Plattform P folgen kann. Die vorliegende Erfindung ist aber nicht auf diese eine Anordnung beschränkt. Vielmehr können die Seilantriebe SA1,SA2 und SA3 auch so angeordnet sein, dass die zugehörigen Seile einen anderen Winkel als 120 Grad aufweisen. Oder es können auch vier Seilantriebe vorgesehen sein, die dann einer entsprechenden viereckigen Ebene E aufspannen. Es könnten aber auch sechs Seilantriebe eine näherungsweise runde Ebene aufspannen, wobei die entsprechenden Seile dann vorzugsweise in einem Winkel von 60 Grad auf die Versorgungseinrichtung einwirken könnten. Wesentlich bei diesen oder auch weiteren Ausführungen mit einer noch größeren Zahl an Kraftübertragungseinrichtungen ist, dass die Seilantriebe immer so angeordnet sind, dass die aufgespannte Ebene E immer so groß ist, dass die Versorgungseinrichtung O zumindest näherungsweise über der Plattform P positionierbar ist, um die Verbindung M1, M2, M3 zwischen Versorgungseinrichtung O und Plattform P möglichst gering zu halten und dass die Versorgungseinrichtung O eindeutig zu jeder Position in diese Ebene E geführt werden kann.

Weiterhin kann vorgesehen sein, dass die Seile S1,S2 und S3 über zusätzliche Führungseinrichtungen (nicht gezeigt) geführt werden. In diesem Fall müssen an den, in Figur 1 gezeigten, Orten der Seilantriebe SA1, SA2 und SA3 die Führungseinrichtungen angeordnet sein, um weiterhin die gleiche Ebene E aufzuspannen und die gleiche Richtung der steuerbaren Kraftänderungen vorzugeben, wie bei der in Figur 1 gezeigten Anordnung. Die Seilantriebe SA1, SA2 und SA3 können in dieser Ausführung dann an einem beliebigen anderen Ort außerhalb des Versuchsraumes angeordnet sein. Die Führungseinrichtungen können, wie zuvor die Seilantriebe, auch bewegbar angeordnet sein.

Die in Figur 1 gezeigte Ausführung weist drei Kraftübertragungseinrichtungen mit drei Seilen S1, S2, S3 und drei Seilantrieben SA1, SA2, S3 auf. In einer weiteren Ausbildung mit drei Kraftübertragungseinrichtungen können zwei der Kraftübertragungseinrichtungen mit Seilen und Seilantrieben realisiert werden und die dritte Kraftübertragungseinrichtung, beispielsweise aus einem elastischen Material, wie z.B. einer mechanischen Feder oder einem elastischen Seil mit einer entsprechend geeigneten Rückstellkraft realisiert werden. Zum Führen der Plattform im Versuchsraum müssen dann nur die Seilantriebe der beiden Kraftübertragungseinrichtungen gesteuert werden, während eine Kraftänderung über die dritte Kraftübertragungseinrichtungen durch die Rückstellkraft des benutzten elastischen Materials vorgegeben. In dieser Ausführung, aber auch in den anderen Ausführungen ist es vorteilhaft, die mittels Seilen realisierten Kraftübertragungseinrichtungen vorzuspannen, um beispielsweise zu verhindern, dass die Seile zu weit durchhängen.

Die in Figur 2 gezeigte Versorgungseinrichtung O ist mit entsprechenden Mitteln zur Übertragung von Energie und/oder Daten und/oder Materialien verbunden. Dies sind die in Figur 2 dargestellten Mittel M1,M2,M3 zwischen Versorgungseinrichtung O und Plattform P sowie die Mittel M1',M2',M3' zwischen Versorgungseinrichtung O und beispielsweise der nicht gezeigten Steuereinrichtung oder auch einem Energiespeicher, die sich beide außerhalb des Versuchsraumes A befinden. So können beispielsweise Mittel M1,M1' bereitstehen um die an der Plattform P ermittelten Messdaten zur weiteren Auswertung, zum Beispiel an die Steuereinrichtung, zu übermitteln. Umgekehrt können entsprechend Steuerdaten von der Steuereinrichtung an die Plattform P übermittelt werden. Weiterhin kann auch mit entsprechenden Mitteln M2, M2' beispielsweise die von der Plattform P zur Bewegung benötigte Energie übertragen werden oder über entsprechende Mittel M3 und M3' auch Kühlmaterialien zur Plattform P übertragen werden. Vorzugsweise ist zumindest eine der Kraftübertragungseinrichtungen so ausgebildet, dass zusätzlich zu den Kraftänderungen auch Energie und/oder Daten und/oder Materialien übertragbar ist. In der ersten Ausbildung kann dabei beispielsweise ein, aus dem Stand der Technik bekanntes, für die Übertragung von elektrischer Energie oder Daten geeignetes Kabel parallel zu einem der Seile S1, S2 oder S3 geführt werden. Dabei muss aber darauf geachtet werden, dass der Kraftänderung weiterhin nur über die Seile S1, S2 oder S3 übertragen wird. Diese Kabel können gleichzeitig mit den parallel angeordneten Seilen S1, S2 oder S3 von den entsprechenden Seilantrieben SA1, SA2, SA3 oder auch von zusätzlichen Seilantrieben auf Spannung gehalten werden. Spezialkabel wie beispielsweise KRANFLEX PUR, KRANFLEX VS oder auch HITTRONIC POF der Firma Lapp haben neben den guten elektrischen bzw. optischen Übertragungseigenschaften auch eine hohe mechanische Zugfestigkeit. Bei Verwendung solcher Kabel, die neben den elektrischen Eigenschaften auch entsprechende mechanische Eigenschaften aufweisen, kann dann die Vorrichtung so ausgebildet sein, dass zumindest eines der Seile S1, S2 oder S3 zur Kraftübertragung und gleichzeitig als Mittel zur Daten- M1' und/oder Energieübertragung M2' benutzt werden kann. Entsprechend können bei geeigneter Auswahl von Seilmaterialien diese auch als Mittel zur Übertragung von Materialien M3' benutzt werden.

Abhängig von den mechanischen Eigenschaften der verwendeten Seile S1,S2 und S3, dem Gewicht der Versorgungseinrichtung O und der Größe des Versuchsraumes A werden die Seile, wie in Figur 2 angedeutet, mehr oder weniger durchhängen. Entsprechend wird sich die Versorgungseinrichtung O auf einer gekrümmten Ebene E über dem Versuchsraum bewegen. In einer alternativen, in Figur 3 dargestellten, Ausführung werden Seile auf Polyethylenbasis eingesetzt, wie sie beispielsweise unter dem Namen LIROS von der Firma Rosenberger Tauwerke GmbH bekannt sind. Diese weisen sehr hohe mechanische Zugfestigkeit auf und können somit entsprechend hoch vorgespannt werden. Dadurch wird ein Durchhängen der Seile weitgehend vermieden und die Versorgungseinrichtung bewegt sich in einer Ebene E mit nahezu konstantem Abstand über dem Versuchsraum A. In der in Figur 3 gezeigten Ausführung sind die Mittel M1',M2',M3' zum Übertragung von Energie und/oder Daten und/oder Materialien über eine zusätzliche Haspel H geführt, die über der Ebene E angeordnet ist. Dabei werden die Mittel M1',M2',M3' so über die Haspel H geführt, dass diese die Mittel M1',M2',M3' vorspannt. Damit wird vermieden, dass die Mittel M1',M2',M3' durchhängen und in die Ebene E oder auch in den Versuchsraum A hineinragen. Vorzugsweise ist die Haspel H über der Mitte der Ebene E angeordnet und um eine Achse drehbar.

Die erfindungsgemäße Vorrichtung ist dann einsetzbar, wenn in einem Versuchsraum A bewegbare Plattformen P ohne eigene Energiequelle zu bewegen sind. Dadurch, dass die Plattform A über die Versorgungseinrichtung O mit Energie, Daten oder Materialien versorgt wird und diese Versorgungseinrichtung O jeder Bewegung der Plattform P nachgeführt werden kann, sind auch hohe Beschleunigungen der Plattform P realisierbar und deren Auswirkungen messbar. Die Plattform P kann beispielsweise zum Prüfen von Sicherheitssystemen für alle Arten von Fahrzeugen, oder auch Fahrtests mit Personen, aber auch für Festigkeitsuntersuchungen von elektronischen Bauelementen herangezogen werden. Bildet die bewegbare Plattform P beispielsweise ein Fahrzeug nach, an dem bestimmte Messungen vorgenommen werden sollen, so kann die Bedienoberfläche der Steuereinrichtung so ausgebildet sein, dass sie ein dem Fahrzeug entsprechendes Lenkrad und Gaspedal aufweist. Der Fahrzeuglenker, der nun die Steuereinrichtung steuert, gibt nun über das Lenkrad und das Gaspedal an der Steuereinrichtung die Richtung und die Beschleunigung des Fahrzeuges vor. Eine Lenkradbewegung bewirkt dabei eine Steuerung der Räder des Fahrzeuges und indirekt zusammen mit der Änderung des Gaspedalwertes eine Steuerung der über die Kraftübertragungseinrichtungen übertragenen Kraftänderungen und dementsprechend eine Bewegung und Beschleunigung des Fahrzeuges im Versuchsraum A. Gleichzeitig wird entsprechend der Lenkradbewegung und des Gaspedalwertes die Versorgungseinrichtung O in der Ebene E geführt, so dass sich die Versorgungseinheit O weitgehend über dem Fahrzeug P befindet. Die Steuerung des Fahrzeuges P und der Versorgungseinrichtung müssen entsprechend zusammenwirken, das heißt, sie können von entsprechenden Regeleinrichtungen einer gemeinsamen Steuereinrichtung oder auch über getrennte Steuereinrichtungen, die aber zusammenwirken, geführt werden. Die Steuerdaten für die Versorgungseinrichtung O und die Plattform P, das heißt das Fahrzeug, können auf verschiedenen Wegen übertragen werden. So können die Steuerdaten für das Fahrzeug P über eine Funkschnittstelle übertragen werden und die Steuerdaten für die Versorgungseinrichtung O über die Mittel M1'. Die Steuerdaten für das Fahrzeug P und die Versorgungseinrichtung O können aber auch über das gemeinsame Mittel M1' von der Steuereinrichtung zur Versorgungseinrichtung übertragen werden. Die Steuerdaten für das Fahrzeug werden dann mit dem Mittel M1 von der Versorgungseinrichtung O weiter zur Plattform P übertragen.

## Patentansprüche

1. Vorrichtung zum Führen einer bewegbaren Versorgungseinrichtung (O) in einer Ebene (E) über einem zweidimensionalen Versuchsraum (A),
**gekennzeichnet durch**
- zumindest drei, mit der Versorgungseinrichtung (O) verbundenen, Kraftübertragungseinrichtungen;
- wobei, über die Kraftübertragungseinrichtungen übertragene, Kraftänderungen von einer Steuereinrichtung steuerbar sind; und
- wobei die Kraftübertragungseinrichtungen so angeordnet sind und so mit der Versorgungseinrichtung (O) verbunden sind, dass mit den auf die Versorgungseinrichtung (O) einwirkenden gesteuerten Kraftänderungen die Versorgungseinrichtung (O) zu einer eindeutig bestimmten Position innerhalb der Ebene (E) über dem zweidimensionalen Versuchsraum (A) führbar ist.

2. Vorrichtung nach Anspruch 1,
**dadurch gekennzeichnet,**
**dass** die Kraftübertragungseinrichtungen jeweils ein Seil (S1,S2,S3) und einen Seilantrieb (SA1,SA2,S3) aufweisen, wobei das eine Ende der Seile (S1,S2,S3) mit der in der Ebene (E) bewegbaren Versorgungseinrichtung (O) und das andere Ende der Seile (S1,S2,S3) mit den entsprechenden Seilantrieben (SA1,SA2,SA3) verbunden ist, und wobei die Seilantriebe (SA1,SA2,SA3) durch die Steuereinrichtung steuerbar sind, und wobei die Seilantriebe (SA1,SA2,SA3) so angeordnet sind, dass die Versorgungseinrichtung (O) über jede Position des zweidimensionalen Versuchsraumes (A) führbar ist.

3. Vorrichtung nach Anspruch 2,
**dadurch gekennzeichnet,**
**dass** die Seile (S1,S2,S3) über Führungseinrichtungen geführt werden, wobei die Führungseinrichtungen so angeordnet sind, dass die Versorgungseinrichtung über jede Position des zweidimensionalen Versuchsraumes führbar ist.

4. Vorrichtung nach Anspruch 2 oder 3,
**dadurch gekennzeichnet,**
**dass** die Seilantriebe (SA1,SA2,SA3) und/oder die Führungseinrichtungen um die Ebene (E) herum bewegbar angeordnet sind und die Bewegungen von der Steuereinrichtung steuerbar sind.

5. Vorrichtung nach einem der vorherigen Ansprüche 1 bis 4,
**dadurch gekennzeichnet,**
**dass** Mittel (M1,M1', M2,M2', M3,M3') zur Übertragung von Energie und/oder Daten und/oder Materialien von und zur in der Ebenen (E) bewegbaren Versorgungseinrichtung (O) vorgesehen sind.

6. Vorrichtung nach Anspruch 5,
**dadurch gekennzeichnet,**
**dass** zumindest eine den Kraftübertragungseinrichtungen entsprechende Mittel (M1', M2', M3') zur Übertragung von Energie und/oder Daten und/oder Materialien aufweist.

7. Vorrichtung nach Anspruch 5,
**dadurch gekennzeichnet,**
**dass** die Mittel (M1', M2', M3') zur Übertragung von Energie und/oder Daten und/oder Materialien von außerhalb des Versuchsraumes zur Versorgungseinrichtung über eine Haspel (H) geführt werden, wobei die Haspel über der Ebene (E) angeordnet ist.

8. Vorrichtung nach einem der Ansprüche 1 bis 7,
**dadurch gekennzeichnet,**
**dass** die Mittel (M1, M2, M3) zur Übertragung von Energie und/oder Daten und/oder Materialien zwischen der Versorgungseinrichtung (O) und der im Versuchsraum (A) bewegbaren Plattform (P) eine konstante Länge aufweisen, wobei die Versorgungseinrichtung (O) so über dem zweidimensionalen Versuchsraum (A) geführt wird, dass die Position der Versorgungseinrichtung (O) durch die Position der Plattform (P) im Versuchsraum (A) bestimmt ist.
